# EUROPÄISCHE PATENTSCHRIFT

(11) **EP 0 952 940 B1**
(45) Veröffentlichungstag und Bekanntmachung des Hinweises auf die Patenterteilung: **17.12.2003**
(21) Anmeldenummer: 98958190.5
(22) Anmeldetag: 08.10.1998
(51) Int. Cl.: B60S 1/40

(54) **LAGERTEIL ZUM ANLENKEN EINES WISCHERBLATTS**
SUPPORT FOR THE JOINT HINGE OF A WIPER BLADE
SUPPORT D'ARTICULATION D'UN BALAI D'ESSUIE-GLACE

(30) Priorität: 16.10.1997 DE 19745845
(43) Veröffentlichungstag der Anmeldung: 03.11.1999
(73) Patentinhaber: ROBERT BOSCH GMBH, 70442 Stuttgart (DE)
(72) Erfinder: WESTERMANN, Klaus-Jürgen, D-76307 Karlsbad (DE); POLLARIS, Eric, B-3670 Meeuwen-Gruitrook (BE); STRAUSS, Andreas, D-76863 Herxheim (DE)
(86) Internationale Anmeldenummer: DE9802971
(87) Internationale Veröffentlichungsnummer: WO99020504

(56) Entgegenhaltungen:
- EP-A- 0 655 373
- DE-A- 4 229 127
- FR-A- 2 562 013
- FR-A- 2 631 300

## Beschreibung

### Stand der Technik

Die Erfindung geht aus von einem Lagerteil zum Anlenken eines Wischerblatts nach dem Oberbegriff des Anspruchs 1, wobei das Lagerteil jenem nach der EP-A-0 655 373 gattungsgemäß ausgebildet ist.

Bekannte Scheibenwischer besitzen einen Wischerarm, der aus einem Befestigungsteil und einem daran angelenkten Gelenkteil mit einer Wischstange aufgebaut ist. Ferner haben sie ein Wischerblatt, das aus einem Tragbügelsystem mit einem übergeordneten Mittelbügel und gelenkig verbundenen, untergeordneten Zwischenbügeln sowie Krallenbügeln und einer Wischleiste aufgebaut ist. Das Wischerblatt ist am Wischerarm angelenkt, indem ein hakenförmiges Ende der Wischstange ein Lagerteil hält, das zwischen zwei Seitenwangen des Mittelbügels angeordnet ist und mit einer über einen Umfangsbereich offenen Nabe einen Gelenkbolzen des Mittelbügels umfaßt. Das so gebildete Gelenk führt das Wischerblatt während der Schwenkbewegung über die Scheibe, wobei das Gelenk und das Tragbügelsystem es ermöglichen, daß sich die Wischleiste einer Wölbung der Scheibe anpassen kann.

Während der Wischerarm in der Regel fahrzeugspezifisch gestaltet ist und sich praktisch während der Lebensdauer nicht abnutzt, verschleißt das Wischerblatt insbesondere an den Gelenken und an der Wischleiste, so daß es während der Lebensdauer des Fahrzeugs häufiger gewechselt werden muß. Hierbei wird in der Regel nicht nur die Wischleiste, sondern das gesamte Wischerblatt ausgetauscht, das im Handel erhältlich ist.

Um die Anzahl der Wischerblattypen gering zu halten, werden den Wischerblättern Lagerteile aus Kunststoff beigepackt, die unterschiedliche Aufnahmevorrichtungen für die Wischstange aufweisen und es daher ermöglichen, das gleiche Wischerblatt mit Wischstangen mit unterschiedlichen Materialstärken und Breiten sowie Biegeradien und Rastelementen zu verwenden. Der Benutzer wählt aus den vorhandenen Lagerteilen das für sein Fahrzeug geeignete aus und wirft die übrigen fort. Die überflüssigen Lagerteile vergrößern die Verpackung der Wischerblätter und führen zu einem vergrößerten Müllanfall. Ferner steigt das Transport- und Lagervolumen.

Aus der EP-B-0 234 525 ist ein gattungsmäßiges Lagerteil bekannt, das zur offenen Nabe in Längsrichtung versetzt einen Quersteg aufweist, der in montiertem Zustand des Lagerteils am hakenförmigen Ende der Wischstange als Fixierung in Längsrichtung dient. Dazu hat der Quersteg von der Drehachse der Nabe einen Abstand, der dem äußeren Biegeradius des hakenförmigen Endes der Wischstange entspricht. Die Wischstange benötigt daher zur Längssicherung des Lagerteils kein Rastloch. Das Lagerteil ist somit für Wischstangen mit und ohne Rastloch geeignet.

Ferner ist aus der EP-A-0 655 373 ein ähnliches Lagerteil bekannt, das zwei in Längsrichtung zur Nabe versetzt angeordnete Querstege aufweist, die als Längssicherung für ein hakenförmiges Ende einer Wischstange dienen, und zwar der Quersteg, der der Drehachse am nächsten liegt, für ein hakenförmiges Ende mit einem kleineren Biegeradius und der andere Quersteg für ein hakenförmiges Ende mit einem größeren Biegeradius. Das hakenförmige Ende mit einem größeren Biegeradius liegt mit seiner gebogenen Innenfläche an einer entsprechend geformten Anlagefläche des ersten Quersteges an. Somit ist dieses Lagerteil für Wischstangen geeignet, deren hakenförmige Enden zwei unterschiedliche Biegeradien aufweisen, jedoch nicht für Wischstangen, deren hakenförmige Enden unterschiedliche Breiten haben. Um das Lagerteil gegenüber der Wischstange gegen Verdrehen zu sichern, besitzt es einen weiteren Quersteg und eine zur Nabe hin versetzt angeordnete Rastnase. Die Wischstange wird bei der Montage zwischen dem Quersteg und der Rastnase eingerastet.

Aus der DE-A-42 29 127 ist ein Lagerteil bekannt, das einen Grundkörper und einen Kupplungsteil aufweist, der mit einem Abstand zum Grundkörper zwischen zwei Seitenwänden angeordnet ist. Der Grundkörper und das Kupplungsteil besitzen Außenkonturen mit einem unterschiedlichen Krümmungsradius, die zur Aufnahme von hakenförmigen Enden von Wischstangen geeignet sind, die einen unterschiedlichen Biegeradius besitzen. Es sind keine Vorkehrungen vorgesehen, die die Montage von Wischstangen unterschiedlicher Breite gestatten würden.

### Vorteile der Erfindung

Nach der Erfindung ist das Lagerteil für Wischstangen mit unterschiedlicher Breite etwa um 180° um die Nabe gedreht montierbar. Dazu weisen die Seitenwände im Bereich für die Schenkel des hakenförmigen Endes einer schmaleren Wischstange auf der einen Seite der Nabe einen kleineren, lichten Abstand zum seitlichen Führen auf, während die Seitenwände im Bereich für die Schenkel einer breiteren Wischstange des hakenförmigen Endes auf der anderen Seite der Nabe einen größeren, lichten Abstand zum seitlichen Führen haben.

Vorteilhafterweise hat das Lagerteil an beiden Enden außen die gleiche Breite, so daß es zwischen den Seitenwangen des Mittelbügels gut geführt ist. Dies wird durch Sicken erreicht, die an einem Ende den geringeren lichten Abstand der Seitenwände bestimmen.

Nach einer Ausgestaltung der Erfindung weist eine äußere Kontur der Nabe eine Anlagefläche für das hakenförmige Ende der Wischstange mit einem kleinen Biegeradius und einer geringeren Materialstärke auf. Im Abstand, der der Materialstärke entspricht, ist ein erster Quersteg in Längsrichtung versetzt zur Nabe angeordnet, der im montierten Zustand an dem äußeren Biegeradius des hakenförmigen Endes anliegt und somit das Lagerteil zum Wischerarm in Längsrichtung fixiert. Dadurch erübrigt sich eine sonst übliche Rastnase, die in ein Rastloch des hakenförmigen Endes der Wischstange eingreift. Somit ist das Lagerteil für Wischstangen mit unterschiedlichen Rastlöchern oder solchen geeignet, die kein Rastloch haben.

Für Wischstangen mit einem hakenförmigen Ende, das einen größeren Biegeradius hat, weist der erste Quersteg an seiner äußeren Kontur, die der Nabe abgewandt ist, eine Anlagefläche auf. Im Abstand zu dieser, der der größeren Materialstärke der Wischstange entspricht, ist ein zweiter Quersteg angeordnet, der im montierten Zustand einen Anschlag in Längsrichtung für die Wischstange darstellt.

Der zweite Quersteg hat zur Nabe hin eine abgeflachte Anlagefläche für eine schmalere Wischstange mit einem hakenförmigen Ende mit einem kleineren Biegeradius und mit einer geringeren Materialstärke. In diesem Fall dient der erste Quersteg im montierten Zustand als Fixierung in Längsrichtung für die Wischstange. Dabei wird die Abflachung so gewählt, daß im mittleren, abgeflachten Bereich der Anlagefläche der Abstand zum ersten Quersteg der größeren Materialstärke der Wischstange mit einem größeren Biegeradius entspricht.

Um die Schwenkbewegung der Wischstange zum Lagerteil zu begrenzen, sind weitere Querstege angeordnet, an denen die Wischstange im montierten Zustand anliegt. Zweckmäßigerweise ist an den Seitenwänden mindestens an jedem Ende eine Rastnase vorgesehen, die in Verbindung mit den weiteren Querstegen die Wischstange in der montierten Lage halten. Die Schenkel der Wischstange an ihrem hakenförmigen Ende liegen annähernd parallel zur Längsrichtung, wobei die Wischstange zwischen den weiteren Querstegen und den jeweiligen Rastnasen fixiert ist. Damit Wischstangen mit einer unterschiedlichen Materialstärke spielfrei fixiert werden können, ist es vorteilhaft, die Rastnase zu den weiteren Stegen zur Nabe hin in Längsrichtung versetzt anzuordnen. Dadurch erhält die Wischstange mit der kleineren Materialstärke eine größere Neigung zur Längsrichtung, so daß sie den in Längsrichtung projizierten Zwischenraum zwischen dem weiteren Quersteg und der Rastnabe spielfrei ausfüllt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: eine Draufsicht auf einen Scheibenwischer,

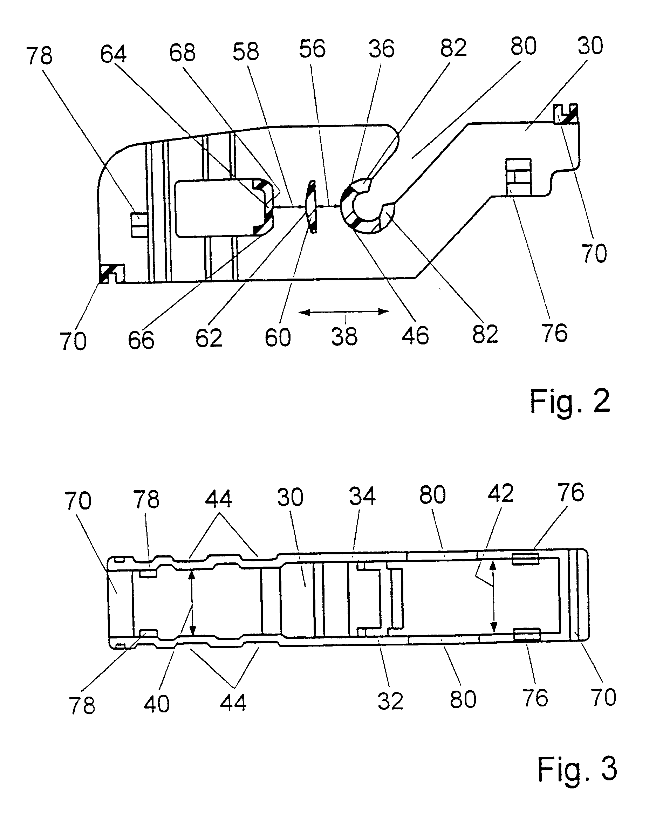

- Fig. 2: einen Längsschnitt durch ein erfindungsgemäßes Lagerteil,
- Fig. 3: eine Ansicht von oben auf das Lagerteil nach Fig. 2,
- Fig. 4: einen Längsschnitt entsprechend Fig. 2 mit einem halbmontierten Lagerteil an einer Wischstange mit einer größeren Breite und einer kleineren Materialstärke,
- Fig. 5: einen Längsschnitt entsprechend Fig. 4 mit einem Lagerteil in montierter Lage,
- Fig. 6: einen Schnitt entsprechend Fig. 5, jedoch mit einer Wischstange mit einer größeren Materialstärke und einem größeren Biegeradius ihres hakenförmigen Endes und
- Fig. 7: einen Schnitt entsprechend Fig. 5 mit einem um 180° gedrehten Lagerteil für eine schmalere Wischstange.

### Beschreibung der Ausführungsbeispiele

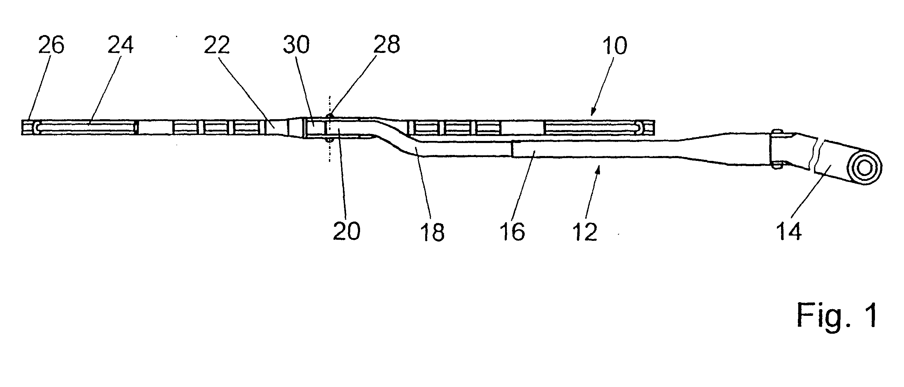

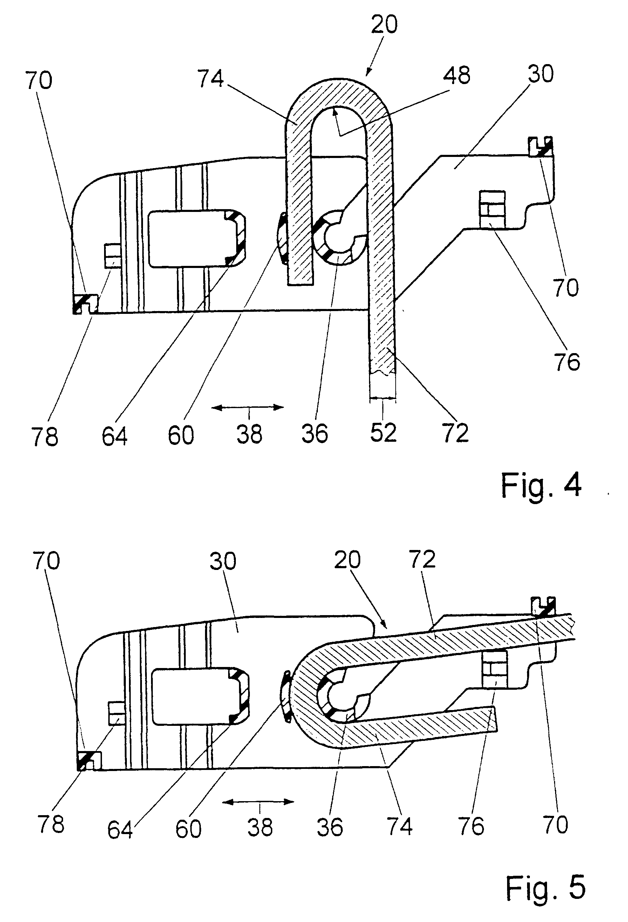

Der in Fig. 1 dargestellte Scheibenwischer besitzt einen Wischerarm 12 mit einem Befestigungsteil 14 und einem Gelenkteil 16, an dem eine Wischstange 18 befestigt ist. Das Gelenkteil 16 und die Wischstange 18 können auch einstückig ausgebildet sein. Die Wischstange 18 hält mit ihrem hakenförmigen Ende 20 (Fig. 5) ein Lagerteil 30, das zwischen Seitenwangen eines Mittelbügels 22 angeordnet ist und einen Lagerbolzen 28 des Mittelbügels 22 mit einer offenen Nabe 36 umfaßt. Der Mittelbügel 22 ist Teil eines Wischerblatts 10, dessen Wischleiste 26 über Krallenbügel 24 gelenkig mit dem Mittelbügel 22 verbunden ist.

Das Lagerteil 30 hat zwei sich in Längsrichtung 38 erstrekkende Seitenwände 32, 34, die über die Nabe 36, einen ersten Quersteg 60, einen zweiten Quersteg 64 und weitere Querstege 70 miteinander verbunden sind. Die Seitenwände 32, 34 weisen an ihren Enden unterschiedlich große lichte Abstände 40, 42 auf, wobei der kleinere lichte Abstand 40 durch Sicken 44 gebildet wird, so daß außen an beiden Enden die Breite des Lagerteils 30 trotz der unterschiedlichen lichten Abstände 40, 42 gleich ist und damit das Lagerteil 30 sicher in dem Mittelbügel 22 geführt ist. Die unterschiedlichen lichten Abstände 40, 42 sind für Wischstangen 18 mit einer entsprechenden Breite vorgesehen, die mit dem hakenförmigen Ende 20 zwischen den Seitenwänden 32 bzw. 34 geführt werden. Somit kann das Lagerteil 30 für Wischstangen 18 mit zwei verschiedenen Breiten verwendet werden.

Das hakenförmige Ende 20 mit einer geringeren Materialstärke 52 und einem kleineren Biegeradius 48 (Fig. 5) wird quer zur Längsrichtung 38 durch das Lagerteil 30 geschoben und über die Nabe 36 gezogen, bis die innere Kontur an der Nabe 36 anliegt. Dann wird es um ca. 90° geschwenkt, bis es mit seinem längeren Schenkel 72 an dem weiteren Steg 70 anliegt und zwischen diesem und einer Rastnase 76 einrastet (Fig. 5). In der montierten Lage (Fig. 5) liegen die Schenkel 72, 74 der Wischstange 18 fast parallel zur Längsrichtung 38, jedoch mit einer geringen Neigung, so daß die innere bzw. äußere Seite des längeren Schenkels 72 spielfrei an der Rastnase 76 bzw. an dem weiteren Quersteg 70 anliegen. Dies wird insbesondere dadurch erreicht, daß die Rastnase 76 relativ zum weiteren Quersteg 70 in Längsrichtung 38 auf die Nabe 36 zu versetzt angeordnet ist.

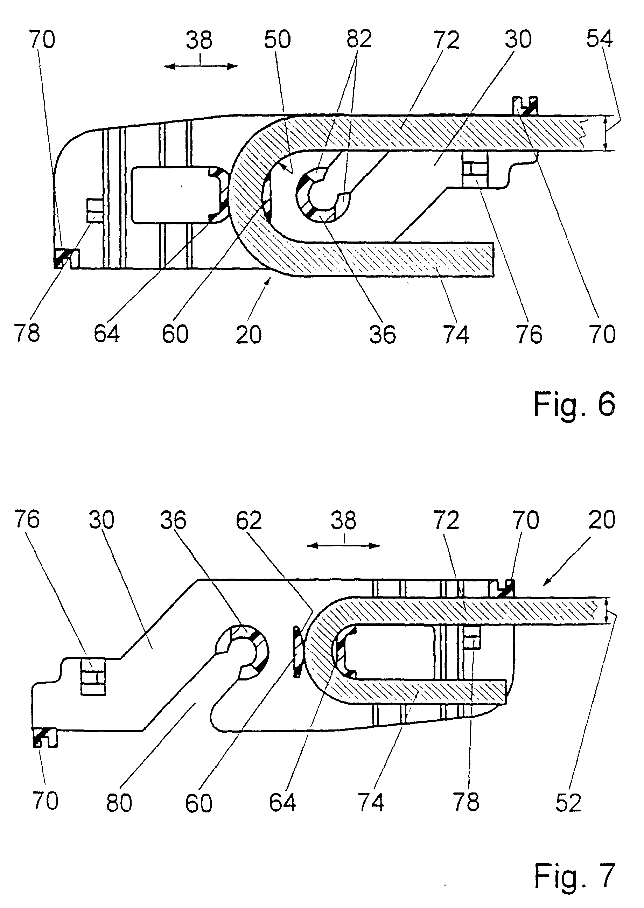

In Längsrichtung 38 wird das hakenförmige Ende 20 von dem ersten Quersteg 60 gehalten, der in einem Abstand 56 von der Nabe 36 angeordnet ist, der der kleineren Materialstärke 52 entspricht. Der erste Quersteg 60 besitzt auf der Seite, die von der Nabe 36 abgewandt ist, eine Anlagefläche 62 für eine Wischstange 18 mit einem hakenförmigen Ende 20, das einen größeren Biegeradius 50 und eine größere Materialstärke 54 hat (Fig. 6). Das hakenförmige Ende 20 nach Fig. 6 wird in ähnlicher Weise montiert wie das nach Fig. 5, jedoch wird es über die Nabe 36 und den ersten Quersteg 60 gezogen und dann um eine virtuelle Achse, die zwischen der Anlagefläche 62 und der Nabe 36 liegt, um 90° geschwenkt, bis der längere Schenkel 72 zwischen dem weiteren Quersteg 70 und der Rastnase 76 einrastet. Damit das hakenförmige Ende 20 über die Nabe 36 und den ersten Quersteg 60 gezogen und anschließend gedreht werden kann, sind an der Nabe 36 entsprechende Aussparungen 82 vorgesehen.

Zur Sicherung in Längsrichtung 38 ist im Abstand 58 vom ersten Quersteg 60 ein zweiter Quersteg 64 vorgesehen. Dieser hat zum ersten Quersteg 60 hin eine Anlagefläche 66, die im mittleren Bereich eine Abflachung 68 aufweist. Die Anlagefläche 66 dient zur Aufnahme eines hakenförmigen Endes 20 einer schmaleren Wischstange 18 mit einem kleineren Biegeradius und einer kleineren Materialstärke 52 (Fig. 7). Die Abflachung 68 bewirkt, daß die Anlagefläche 62 des ersten Querstegs 60 die axiale Sicherung des hakenförmigen Endes 20 mit der geringeren Materialstärke 52 nach Fig. 7 übernehmen kann und trotzdem ein Abstand 58 für ein hakenförmiges Ende 20 mit einer größeren Materialstärke 54 nach Fig. 6 erreicht wird.

Zur Montage des Lagerteils 30 auf den Lagerbolzen 28 sind in den Seitenwänden 32, 34 Ausnehmungen 80 vorgesehen, die mit der offenen Seite der Nabe 36 in Verbindung stehen. Durch die Elastizität des Materials kann das Lagerteil 30 auf den Lagerbolzen 28 aufgeklipst werden und somit im vormontierten Zustand mit dem Wischerblatt 10 verpackt und ausgeliefert werden.

Das erfindungsgemäße Lagerteil 30 kann für Wischstangen 18 mit zwei unterschiedlichen Breiten, Materialstärken 52, 54 und Biegeradien 48, 50 verwendet werden. Dadurch kann der Bedarf für die drei am meisten vorkommenden Wischstangen 18 , nämlich mit einem Querschnittsprofil von 8 x 3 mm, 9 x 3 mm und 9 x 4 mm, mit einem Lagerteil 30 abgedeckt werden. Es ersetzt, bzw. reduziert, die verwirrende Vielfalt der Lagerteile, die dem Wischerblatt 10 normalerweise beigepackt sind. Es kann ferner bereits in kundenfreundlicher Weise vormontiert werden und reduziert außerdem die Verpackungsgröße.

### Bezugszeichen

- 10: Wischerblatt
- 12: Wischerarm
- 14: Befestigungsteil
- 16: Gelenkteil
- 18: Wischstange
- 20: hakenförmiges Ende
- 22: Mittelbügel
- 24: Krallenbügel
- 26: Wischleiste
- 28: Lagerbolzen
- 30: Lagerteil
- 32: Seitenwand
- 34: Seitenwand
- 36: Nabe
- 38: Längsrichtung
- 40: lichter Abstand
- 42: lichter Abstand
- 44: Sicke
- 46: Anlagefläche
- 48: kleinerer Biegeradius
- 50: größerer Biegeradius
- 52: kleinere Materialstärke
- 54: größere Materialstärke
- 56: Abstand
- 58: Abstand
- 60: erster Quersteg
- 62: Anlagefläche
- 64: zweiter Quersteg
- 66: Anlagefläche
- 68: Abflachung
- 70: weiterer Quersteg
- 72: Schenkel
- 74: Schenkel
- 76: Rastnase
- 78: Rastnase
- 80: Ausnehmung
- 82: Ausnehmung

## Patentansprüche

1. Lagerteil (30) zum Anlenken eines Wischerblatts (10) an ein hakenförmiges Ende (20) einer Wischstange (18) eines Scheibenwischers, das mit einer über einen Teil ihres Umfangs offenen Nabe (36) auf einen Lagerbolzen (28) des Wischerblatts (10) aufsteckbar ist und im montierten Zustand von dem hakenförmigen Ende (20) über Anlageflächen (46, 62, 66) und Rastmittel (70, 76, 78) gehalten wird, wobei zwei Seitenwände (32, 34) über die Nabe (36) und mehrere Querstege (60, 64, 70) miteinander verbunden sind, sich in Längsrichtung (38) auf beiden Seiten zur Nabe (36) erstrecken und an den Schenkeln (72, 74) des hakenförmigen Endes (20) seitlich geführt sind, in dem der lichte Abstand (40, 42) der Seitenwände (32, 34)der Breite der Schenkel (72, 74) entspricht, **dadurch gekennzeichnet, dass** es für Wischstangen (18) mit unterschiedlicher Breite etwa um 180° um die Nabe (36) gedreht montierbar ist und die Seitenwände (32, 34) im Bereich für die Schenkel (72, 74) des hakenförmigen Endes (20) einer schmaleren Wischstange (18) auf der einen Seite der Nabe (36) einen kleineren, lichten Abstand zum seitlichen Führen aufweisen, während die Seitenwände (32, 34) im Bereich für die Schenkel (72, 74) einer breiteren Wischstange (18) des hakenförmigen Endes (20) auf der anderen Seite der Nabe (36) einen größeren, lichten Abstand zum seitlichen Führen haben.

2. Lagerteil (30) nach Anspruch 1, **dadurch gekennzeichnet, daß** der lichte Abstand (40) der Seitenwände (32, 34) an einem Ende durch Sicken (44) verkleinert ist.

3. Lagerteil (30) nach einem der vorhergehenden Ansprüche, **dadurch gekennzeichnet, daß** eine äußere Kontur der Nabe (36) eine Anlagefläche (46) für ein hakenförmiges Ende (20) der Wischstange (18) mit einem kleineren Biegeradius (48) und einer geringeren Materialstärke (52) aufweist und in Längsrichtung (38) im Abstand (56), der der geringeren Materialstärke (52) entspricht, ein erster Quersteg (60) angeordnet ist.

4. Lagerteil (30) nach einem der vorhergehenden Ansprüche, **dadurch gekennzeichnet, daß** der erste Quersteg (60) an seiner äußeren Kontur, die der Nabe (36) abgewandt ist, eine Anlagefläche (62) für ein hakenförmiges Ende (20) einer Wischstange (18) mit einem größeren Biegeradius (50) und einer größeren Materialstärke (54) aufweist und in Längsrichtung (38) im Abstand (58), der der größeren Materialstärke (54) entspricht, ein zweiter Quersteg (64) angeordnet ist.

5. Lagerteil (30) nach einem der vorhergehenden Ansprüche, **dadurch gekennzeichnet, daß** der zweite Quersteg (64) eine zur Nabe (36) hin abgeflachte Anlagefläche (66) für eine schmalere Wischstange (18) mit einem hakenförmigen Ende (20), mit einem kleineren Biegeradius (48) und einer kleineren Materialstärke (52) hat.

6. Lagerteil (30) nach einem der vorhergehenden Ansprüche, **dadurch gekennzeichnet, daß** an den Enden der Seitenwände (32, 34) jeweils ein weiterer Quersteg (70) angeordnet ist, der die Schwenkbewegung der Wischstange (18) begrenzt, so daß die Schenkel (72, 74) des hakenförmigen Endes (20) in der montierten Lage annähernd parallel zur Längsrichtung (38) verlaufen.

7. Lagerteil (30) nach Anspruch 6, **dadurch gekennzeichnet, daß** an den Seitenwänden (32, 34) ausgehend von den weiteren Querstegen (70) nach innen liegend mindestens eine Rastnase (76, 78) vorgesehen ist, die in der montierten Lage an der inneren Seite des langen Schenkels (72) des hakenförmigen Endes (20) anliegt.

8. Lagerteil (30) nach Anspruch 7, **dadurch gekennzeichnet, daß** die Rastnase (76, 78) zu den weiteren Querstegen (70) zur Nabe (36) hin in Längsrichtung (38) soweit versetzt angeordnet ist, daß die Wischstange (18) mit einer kleineren Materialstärke (52) und einem kleineren Biegeradius (48) spielfrei mit einer geringen Neigung zur Längsrichtung (38) gehalten wird.

## Claims

1. Bearing part (30) for coupling a wiper blade (10) to a hook-shaped end (20) of a wiper rod (18) of a window wiper which can be placed with a hub (36), which is open over part of its circumference, onto a bearing bolt (28) of the wiper blade (10) and is held in the fitted state by the hook-shaped end (20) via bearing surfaces (46, 62, 66) and latching means (70, 76, 78), two side walls (32, 34) being connected to each other via the hub (36) and a plurality of transverse webs (60, 64, 70), extending in the longitudinal direction (38) on both sides to the hub (36) and being guided laterally on the limbs (72, 74) of the hook-shaped end (20) in which the clear distance (40, 42) between the side walls (32, 34) corresponds to the width of the limbs (72, 74), **characterized in that** the said bearing part can be fitted rotated approximately through 180° about the hub (36) for wiper rods with differing width, and the side walls (32, 34) in the regions of the limbs (72, 74) of the hook-shaped end (20) of a narrower wiper rod (18), on the one side of the hub (36), are at a smaller clear distance for the lateral guidance while the side walls (32, 34) in the region of the limbs (72, 74) of a wider wiper rod (18) of the hook-shaped end (20), on the other side of the hub (36), are at a larger clear distance to the lateral guidance.

2. Bearing part (30) according to Claim 1, **characterized in that** the clear distance (40) between the side walls (32, 34) is reduced at one end by beads (44).

3. Bearing part (30) according to one of the preceding claims, **characterized in that** an outer contour of the hub (36) has a bearing surface (46) for a hook-shaped end (20) of the wiper rod (18) with a smaller bending radius (48) and a smaller material thickness (52), and a first transverse web (60) is arranged in the longitudinal direction (38) at the distance (56) which corresponds to the smaller material thickness (52).

4. Bearing part (30) according to one of the preceding claims, **characterized in that** the first transverse web (60) has, on its outer contour which faces away from the hub (36), a bearing surface (62) for a hook-shaped end (20) of a wiper rod (18) with a larger bending radius (50) and a larger material thickness (54), and a second transverse web (64) is arranged in the longitudinal direction (38) at the distance (58) which corresponds to the larger material thickness (54).

5. Bearing part (30) according to one of the preceding claims, **characterized in that** the second transverse web (64) has a bearing surface (66), which is flattened towards the hub (36), for a narrower wiper rod (18) with a hook-shaped end (20), with a smaller bending radius (48) and a smaller material thickness (52).

6. Bearing part (30) according to one of the preceding claims, **characterized in that** a further transverse web (70) is arranged in each case at the ends of the side walls (32, 34) and restricts the pivoting movement of the wiper rod (18), with the result that, in the fitted position, the limbs (72, 74) of the hook-shaped end (20) run approximately parallel to the longitudinal direction (38).

7. Bearing part (30) according to Claim 6, **characterized in that** at least one latching lug (76, 78) lying towards the inside, starting from the further transverse webs (70), is provided on the side walls (32, 34) and, in the fitted position, bears against the inner side of the long limb (72) of the hook-shaped end (20).

8. Bearing part (30) according to Claim 7, **characterized in that** the latching lug (76, 78) is arranged offset with respect to the further transverse webs (70) in the longitudinal direction (38) towards the hub (36) to such an extent that the wiper rod (18) with a smaller material thickness (52) and a smaller bending radius (48) is held in a play-free manner at a slight inclination with respect to the longitudinal direction (38).

## Revendications

1. Elément de palier (30) servant à l'articulation d'un balai d'essuie-glace (10) sur une extrémité recourbée (20) d'une tige de bras (18) d'essuie-glace, lequel peut s'enficher sur un goujon de palier (28) du balai d'essuie-glace (10) à l'aide d'un moyeu (36) ouvert sur une partie de sa circonférence et est maintenu à l'état monté sur l'extrémité recourbée (20) au moyen de surfaces d'appui (46, 62, 66) et de moyens d'accrochage (70, 76, 78), deux parois latérales (32, 34) étant reliées entre elles par l'intermédiaire du moyeu (36) et de plusieurs épaulements transversaux (60, 64, 70), s'étendant dans le sens longitudinal (38) des deux côtés du moyeu (36) et étant guidées latéralement sur les branches (72, 74) de l'extrémité recourbée (20), dont l'écartement utile (40, 42) entre les parois latérales (32, 34) correspond à la largeur des branches (72, 74),
**caractérisé en ce que**
pour des tiges de bras (18) présentant une largeur différente, l'élément de palier peut être monté en étant tourné à environ 180° autour du moyeu (36) et les parois latérales (32, 34) dans la zone des branches (72, 74) de l'extrémité recourbée (20) d'une tige de bras (18) plus étroite présentent un écartement utile plus petit d'un côté du moyeu (36) afin de servir au guidage latéral, tandis que les parois latérales (32, 34) dans la zone des branches (72, 74) de l'extrémité recourbée (20) d'une tige de bras (18) plus large présentent un écartement utile plus important de l'autre côté du moyeu (36).

2. Elément de palier (30) selon la revendication 1,
**caractérisé en ce que**
l'écartement utile (40) des parois latérales (32, 34) est réduit à une extrémité par des moulures.

3. Elément de palier (30) selon l'une des revendications précédentes,
**caractérisé en ce qu'**
un contour extérieur du moyeu (36) présente une surface d'appui (46) pour une extrémité recourbée (20) de la tige de bras (18) dont le rayon de courbure (48) est plus petit et l'épaisseur du matériau (52) est plus faible, et une première entretoise transversale (60) est disposée dans le sens longitudinal (38) dans l'écartement (56) correspondant à l'épaisseur de matériau plus faible (52).

4. Elément de palier (30) selon l'une des revendications précédentes,
**caractérisé en ce que**
le premier épaulement transversal (60) présente sur son contour extérieur qui est opposé au moyeu (36) une surface d'appui (62) pour une extrémité recourbée (20) d'une tige de bras (18) possédant un rayon de courbure (50) plus important et une épaisseur de matériau (54) plus importante, et une deuxième entretoise transversale (64) est disposée dans le sens longitudinal (38) dans l'écartement (58) correspondant à l'épaisseur de matériau plus importante (54).

5. Elément de palier (30) selon l'une des revendications précédentes,
**caractérisé en ce que**
la deuxième entretoise transversale (64) présente une surface d'appui (66) à méplat vers le moyeu (36) destinée à une tige de bras (18) dont l'extrémité recourbée (20) possède un rayon de courbure plus petit (48) et une épaisseur de matériau plus faible (52).

6. Elément de palier (30) selon l'une des revendications précédentes,
**caractérisé en ce qu'**
une autre entretoise transversale (70) est disposée à chaque extrémité des parois latérales (32, 34), et limite le pivotement de la tige de bras (18) de telle sorte qu'à l'état monté les branches (72, 74) de l'extrémité recourbée (20) sont presque parallèles au sens longitudinal (38).

7. Elément de palier (30) selon la revendication 6,
**caractérisé en ce qu'**
au moins un ergot (76, 78) est prévu sur les parois latérales (32, 34), disposé vers l'intérieur à partir des autres entretoises transversales (70), et s'appuie après le montage, sur le côté intérieur de la longue branche (72) de l'extrémité recourbée (20).

8. Elément de palier (30) selon la revendication 7,
**caractérisé en ce que**
l'ergot (76, 78) accompagnant les autres entretoises transversales (70) est disposé en décalage par rapport au moyeu (36) dans le sens longitudinal (38) dans une mesure permettant à la tige de bras (18) dont l'épaisseur de matériau (52) est plus faible et le rayon de courbure (48) est plus petit d'être maintenue sans présenter de jeu et avec une faible inclinaison dans le sens longitudinal (38).
